# EUROPÄISCHE PATENTSCHRIFT

(11) **EP 2 497 986 B1**
(45) Veröffentlichungstag und Bekanntmachung des Hinweises auf die Patenterteilung: **16.04.2014**
(21) Anmeldenummer: 12158982.4
(22) Anmeldetag: 12.03.2012
(51) Int. Cl.: F16L 5/08, H02G 3/22

(54) **Vorrichtung zum Abdichten, insbesondere Moduldichtung**
Device for sealing, in particular module seal
Dispositif d'étanchéité, en particulier joint de module

(30) Priorität: 10.03.2011 DE 202011003754 U
(43) Veröffentlichungstag der Anmeldung: 12.09.2012
(73) Patentinhaber: Doyma GmbH & Co, 28876 Oyten (DE)
(72) Erfinder: Chikatimalla, Rajesh, 28309 Bremen (DE); Wagner, Thomas, 27777 Ganderkesee (DE)
(74) Vertreter: Eisenführ Speiser

(56) Entgegenhaltungen:
- EP-A1- 2 228 577
- EP-A1- 2 447 583
- DE-U1- 9 115 271
- DE-U1-202004 011 202
- DE-U1-202008 007 636

## Beschreibung

Die Erfindung betrifft eine Vorrichtung zum Abdichten mindestens einer Leitung im Bereich einer Wanddurchführung, mit zwei oder mehreren ringförmigen, elastisch verformbaren Dichtungselementen nach dem Oberbegriff von Anspruch1.

Derartige Vorrichtungen werden eingesetzt, um Leitungen wie beispielsweise Strom-, Gas- und/oder Wasserleitungen oder ähnliche durch einen Durchbruch in einer Wand, Decke oder Bodenplatte abgedichtet hindurchzuführen. Die Wand kann beispielsweise eine Gebäude-, Schiffswand oder dergleichen sein. Innerhalb eines Gebäudes findet man Durchbrüche immer dort, wo Leitungen über Geschoss- oder Raumgrenzen hinweg verlaufen. Insbesondere bei Hauseinführungen, bei denen Leitungen von außen in das Gebäude eingeführt werden, ist es erforderlich, die Durchbrüche abzudichten, um das Eindringen von Feuchtigkeit in das Gebäude zu verhindern. Auch innerhalb von Gebäuden oder Schiffen ist die Abdichtung der Durchbrüche dann besonders wichtig, wenn Leitungen durch Feuchträume, wie Bäder oder Duschen verlaufen. Durchbrüche sind üblicherweise in Form von Kernlochbohrungen ausgeführt.

Zu diesem Zweck wird in der Regel zunächst die Vorrichtung oder Dichtungsvorrichtung In den Wanddurchbruch eingesetzt und in diesem befestigt. Hierauf folgend wird die Leitung durch die ringförmige Vorrichtung hindurchführt. Häufig wird die Vorrichtung dann auf eine Art und Weise radial so vorgespannt, dass eine Abdichtung einerseits zur Leitung und andererseits in Richtung der Wand erzeugt wird.

Ein Nachteil bei solchen Dichtungen besteht darin, dass zwar die Größe, insbesondere der Durchmesser des Wanddurchbruchs häufig eine standardisierte Abmessung aufweist, jedoch durch diesen Durchbruch Leitungen mit unterschiedlichen Abmessungen, insbesondere unterschiedlichen Durchmessern, oder auch eine Vielzahl von Leitungen durchgeführt werden müssen. Eine solche Dichtung ist beispielsweise aus EP 1 468 216 bekannt. Diese Dichtungsvorrichtung besteht aus einem ringförmigen Dichtungselement, welches mittels zweier Spannringe axial so mit einem Druck beaufschlagt wird, dass das Volumen des Dichtungselements radial nach innen und nach außen gedrängt wird und sich so der innere Durchmesser des Dichtungselements ändert. Allerdings ist diese Durchmesseränderung sehr begrenzt. Es kann zu Beschädigungen des Dichtungselements kommen. Von solchen Dichtungsvorrichtungen ist daher in der Regel eine große Stückzahl vorzuhalten deren Außendurchmesser jeweils gleich ist und deren Innendurchmesser an die jeweilige Leitungsgröße angepasst ist. Ein Nachteil ergibt sich hier unter anderem in der aufwändigen Bevorratung und der Handhabung dieser Bausätze vor Ort auf der Baustelle, da stets eine beträchtliche Menge von Dichtungsvorrichtungen jeder Größe vorrätig gehalten werden muss.

Weiterhin ist es bekannt, eine Dichtungsvorrichtung zu verwenden, die einstückig ausgebildet ist und die in mehrere, radial zueinander angeordnete Abschnitte unterteilt ist. Diese Abschnitte können dann entsprechend der gewünschten Abmessungen der Dichtungsvorrichtung herausgetrennt werden, zum Beispiel durch Herausreißen oder Einschneiden mit einem Messer, um die Dichtungsanordnung an die Leitungsabmessung anzupassen. Eine solche Dichtungsvorrichtung ist beispielsweise aus EP 2 228 577 bekannt. Das Heraustrennen des Dichtungselements erfolgt mechanisch unter Zuhilfenahme von Werkzeug vor Ort und verursacht Zeitaufwand und Mühe. Weiterhin ist nachteilhaft, dass bei dieser Lösung ein fehlerhaftes Heraustrennen für eine irrtümlich zu groß angenommene Leitung nicht korrigiert werden kann, da der einmal herausgetrennte Abschnitt der Dichtungsanordnung nicht wieder angefügt werden kann.

Eine demgegenüber verbesserte Dichtungsvorrichtung offenbart DE 20 2004 011 202. Eine solche Dichtungsvorrichtung weist mehrere ringförmige, elastisch verformbare Dichtungselemente auf, die unterschiedliche Kerndurchmesser haben und lösbar ineinander anordenbar sind. Hierbei ist allerdings nachteilig, dass ein einmal entferntes Dichtungselement nur mit größerem Aufwand wieder in die Vorrichtung einfügbar ist. Insbesondere hat es sich gezeigt, dass teilweise Dichtungselemente mit falschen Durchmessern eingefügt werden oder die Dichtungselemente nicht vollständig gefügt werden. Ein solcher fehlerhafter Montagevorgang führt zu einem weitgehenden Funktionsverlust der Dichtung, da die Dichtwirkung zwischen den einzelnen Dichtungselementen dann nicht mehr gewährleistet ist. Zwar weisen die Dichtungselemente, welche aus DE 20 2004 011 202 bekannt sind, Anschläge auf, gegen die diese gefügt werden können, jedoch ist es für einen Benutzer dieser Vorrichtung beispielsweise auf einer Baustelle schwer zu erkennen, ob die Dichtungselemente in der richtigen Art und Weise gefügt wurden und die Dichtungsvorrichtung somit funktionsfähig ist.

Des Weiteren ist aus der DE 20 2008 007 636 U1 eine Vorrichtung zum Abdichten einer Rohrleitung im Bereich einer Wanddurchführung mit zwei, jeweils einteiligen Dichtungskörpern bekannt, die Dichtungselemente mit unterschiedlichen Durchmessern aufweisen. Die Dichtungselemente bilden dabei vorbestimmte Schichten um die abzudichtende Rohrleitung aus, wobei jeweils zueinander benachbarte Dichtungselemente unterschiedlichen sich aus einer Vielzahl von Dichtungselementen zusammensetzenden Dichtungskörpern zugeordnet sind. Die Dichtungselemente eines Dichtungskörpers sind jeweils radial zueinander beabstandet, wobei die Dichtungselemente eines Dichtungskörpers entlang einer Stirnseite untereinander verbunden sind.

Der vorliegenden Erfindung liegt die Aufgabe zugrunde, eine bezüglich der Benutzung verbesserte Vorrichtung zum Abdichten mindestens einer Leitung im Bereich einer Wanddurchführung anzugeben. Insbesondere eine Vorrichtung anzugeben, die beim Einsatz und der Montage verbessert bzw. vereinfacht ist und zudem eine sichere Abdichtung der Leitung in der Durchführung ermöglicht..

Gemäß einem Aspekt der Erfindung sind Positioniermittel vorgesehen, die dazu eingerichtet sind, eine oder mehrere Positioniermöglichkeiten von jeweils mindestens zwei Dichtungselementen relativ zueinander und/oder zu der Vorrichtung vorzusehen. Eine solche Vorrichtung kann neben den Dichtungselementen zusätzlich ein Gehäuse aufweisen, welches in eine Wanddurchführung einsetzbar ist. Vorzugsweise sind die Positioniermittel dazu eingerichtet nur eine Positioniermöglichkeit von jeweils zwei Dichtungselementen relativ zueinander vorzusehen. Vorzugsweise sind die Positioniermittel dazu eingerichtet nur zwei Positioniermöglichkeiten von jeweils mindestens zwei Dichtungselementen relativ zu der Vorrichtung vorzusehen. Sind die Dichtungselemente im Wesentlichen rotationssymmetrisch ausgebildet, beziehen sich die Positioniermöglichkeiten im Wesentlichen auf eine axiale Positionierung der Dichtungselemente. So wird erfindungsgemäß ein falsches Fügen von Dichtungselementen verhindert und die Funktionsfähigkeit der Vorrichtung ist gewährleistet. Insbesondere ist vorteilhaft, dass die Vorrichtung mehrere Dichtungselemente aufweist, sodass entsprechende Dichtungselemente entfernbar sind, um eine Vorrichtung mit einem gewünschten Innendurchmesser zu erreichen. Ist es erforderlich, wieder ein Dichtungselement einzusetzen bzw. zu fügen ist dies erfindungsgemäß mittels der Positioniermittel leicht möglich. Indem die Positioniermittel nur eine oder mehrere Positioniermöglichkeiten der Dichtungselemente vorsehen ist ein falsches Positionieren verhindert und es ist für einen Nutzer sofort ersichtlich, ob die Dichtungselemente in der richtigen Art und Weise gefügt wurden. So ist auch die Funktionsfähigkeit der Vorrichtung zum Abdichten auf leichte Art und Weise sicherzustellen und zu überprüfen. Zudem weisen die Dichtungselemente jeweils einen Kragen auf und die Kragen zweier benachbarter Dichtungselemente sind in axialer Richtung auf gegenüberliegenden Seiten der Moduldichtung angeordnet. Ein solcher Kragen ist vorzugsweise nur an einem axialen Ende einer Dichtungselements als sich radial ringförmig nach außen erstreckender Vorsprung ausgebildet. Vorzugsweise ist der Kragen an dem Ende mit dem größeren Durchmesser ausgebildet, falls das Dichtungselement konisch ausgebildet ist. Durch die Kragen und die wechselseitige Anordnung derselben wird ein Verschieben der Dichtungselemente gegeneinander verhindert. Insbesondere ist bevorzugt, dass die Vorrichtung so in einer Wanddurchführung eingebaut wird, dass der Kragen des radial innersten Dichtungselements auf der Seite der Vorrichtung liegt, von der aus die abzudichtende Leitung eingeschoben wird, um so eine formschlüssige Verschiebsicherung des radial innersten Dichtungselements in Einschubrichtung zu erhalten. Auch beim Herausnehmen eines Dichtungselements führt der Kragen des nächst äußeren Dichtungselements dazu, dass dieses nicht gleichzeitig mit herausgezogen wird. Daneben bilden die Kragen eine zusätzliche Dichtung, wodurch die Dichtleistung einer Vorrichtung erhöht wird. In diesem Zusammenhang weist der Kragen erfindungsgemäß mindestens eines jeweils ersten Dichtungselements eine Ausnehmung auf und ein zweites, radial benachbartes oder beabstandetes Dichtungselement weist einen Vorsprung auf, der dazu eingerichtet ist mit der Ausnehmung formschlüssig als Positioniermittel zusammenzuwirken. Dies ist eine besonders einfache und vorteilhafte Art und Weise Ausnehmung und Vorsprung an einem Dichtungselement anzuordnen. Insbesondere ist vorteilhaft, dass so die Positioniermittel jeweils von außerhalb der Vorrichtung sichtbar sind. Dadurch ist das korrekte Fügen der Dichtungselemente zueinander auf einfache Weise überprüfbar. Beispielsweise kann ein Vorsprung an dem Kragen eines Dichtungselements angeordnet sein. In einer Alternative ist der Vorsprung an der dem Kragen abgewandten Seite des Dichtungselements angeordnet. Die Vorsprünge und Ausnehmungen können dabei so ausgebildet sein, dass jeweils nur eine Positioniermöglichkeit von jeweils mindestens zwei Dichtungselementen zueinander vorgesehen ist. Alternativ sind Ausnehmungen und Vorsprünge so angeordnet, dass beispielsweise zwei oder mehr Positioniermöglichkeiten vorgesehen sind. Solche Positioniermöglichkeiten können beispielsweise jeweils um 180 Grad um die Längsachse verdreht ausgebildet sein. Dies ist beispielsweise vorteilhaft, wenn an dem Kragen Informationsmittel, beispielsweise in Textform angeordnet sind.

Die Dichtungselemente sind bezogen auf eine Längsachse wenigstens teilweise konisch ausgebildet. In einer Alternative sind die Dichtungselemente nicht nur wenigstens teilweise konisch ausgebildet, sondern vollständig konisch ausgebildet. Insbesondere ist eine äußere Umfangfläche mindestens eines Dichtungselements bezogen auf die Längsachse konisch ausgebildet. Insbesondere ist diese Umfangsfläche über die gesamte axiale Länge des Dichtungselements konisch ausgebildet. Alternativ ist eine innere Umfangsfläche von mindestens einem Dichtungselement konisch ausgebildet. In einer weiteren bevorzugten Alternative sind sowohl die äußere, als auch die innere Umfangsfläche von mindestens einem Dichtungselement konisch ausgebildet. Erfindungsgemäß weist eine Vorrichtung mindestens zwei Dichtungselemente auf. Es ist auch bevorzugt, dass beispielsweise das erste Dichtungselement eine äußere zylindrische Umfangsfläche und eine innere konische Umfangsfläche und das zweite Dichtungselement eine äußere konische Umfangsfläche und eine innere zylindrische Umfangsfläche aufweist. Insbesondere ist ein Winkel von etwa 0,3 bis 2 Grad bevorzugt. Durch die Konizität der Dichtungselemente ist ein Fügen der Dichtungselemente ineinander wesentlich vereinfacht. So können zudem Beschädigungen an dem Dichtungselement vermieden werden, welche durch ein Fügen von Dichtungselementen zueinander auftreten können. Dadurch wird die Funktionsfähigkeit der Vorrichtung sichergestellt, auch nachdem ein Dichtungselement nachträglich zu der Vorrichtung eingefügt wurde. Vorzugsweise sind die Dichtungselemente dabei so ausgebildet, dass ihre Oberflächen nach dem Fügen jeweils aneinander anliegen. Dies ist insbesondere bei den konisch ausgebildeten Dichtungselementen vorteilhaft, da so eine Dichtwirkung zwischen den Dichtungselementen weiter positiv ausgestaltet wird.

Gemäß einer bevorzugten Ausführungsform weist die Vorrichtung Spannmittel zum Verspannen der Dichtungselemente auf, welche so ausgebildet sind, dass eine Pressung der Dichtungselemente in radialer Richtung bewirkt wird, wobei die Spannmittel mindestens einen Spannring zum Spannen eines ringförmigen, elastisch verformbaren Dichtungselements aufweisen und eine Oberfläche des Spannrings gegen eine axiale Oberfläche eines Dichtungselements pressbar ist, wobei mindestens eine der Oberflächen konvex ausgebildet ist. Der Begriff Oberfläche bezieht sich hier auf die axialen Oberflächen des Dichtungselements und/oder des Spannrings. Vorzugsweise weist die Vorrichtung zwei Spannringe auf. Diese Spannringe sind vorzugsweise an axialen Enden des Dichtungselements angeordnet. Das Dichtungselement ist vorzugsweise in der Vorrichtung als radial äußerstes Dichtungselement angeordnet. Alternativ ist es als zweitäußerstes Dichtungselement angeordnet. Besonders bevorzugt sind die axialen Oberflächen des Dichtungselements konvex ausgebildet. Der Spannring bzw. die Spannringe können in einer solchen Ausführungsform flächig ausgebildet sein. So wird auch die Fertigung einer erfindungsgemäßen Vorrichtung wesentlich vereinfacht. Indem mindestens eine der Oberflächen konvex ausgebildet ist, ist eine geringere Spannkraft zum Verpressen des Dichtungselements erforderlich. Dadurch wird die Benutzung, insbesondere Montage der Vorrichtung wesentlich vereinfacht. Vorzugsweise sind die beiden Spannringe mittels Schrauben oder Gewindestifte miteinander verbunden, sodass die erforderliche Spannkraft durch Drehen der Schrauben aufbringbar ist. Alternativ weist die Vorrichtung Spannhebel auf, sodass eine Spannkraft über Verschwenken eines Hebels aufbringbar ist. Insbesondere ist vorteilhaft, wenn die axialen Oberflächen des Dichtungselements konvex ausgebildet sind, da so ein Beschädigen des Dichtungselements beim Spannen wirksam verhindert wird und die Funktionsfähigkeit der Vorrichtung zum Abdichten gewährleistet ist.

Gemäß einer bevorzugten Ausführungsform weisen die Positioniermittel an den Dichtungselementen ausgebildete Vorsprünge und/oder Ausnehmungen auf, die mit korrespondierenden Ausnehmungen und/oder Vorsprüngen zum Positionieren der Dichtungselemente zusammenwirken. Eine solche Weiterbildung der Positioniermittel führt zu einer besonders einfachen Gestaltung der Positioniermittel. Vorzugsweise sind die Vorsprünge bzw. Ausnehmungen so an den Dichtungselementen angeordnet, dass sie in einem montierten Zustand wenigstens teilweise sichtbar sind. So ist es für einen Benutzer leicht erkennbar, ob zwei Dichtungselemente in der richtigen Art und Weise zueinander gefügt wurden. Zudem sind Vorsprünge und Ausnehmungen leicht herstellbar, wodurch Fertigungskosten einer Vorrichtung gesenkt werden können. In einer Alternative sind die Vorsprünge und Ausnehmungen nach Art einer Klickverbindung ausgestaltet, wodurch ein Nutzer ein zusätzliches akustisches Signal über das Fügen der Dichtungselemente erhält. Vorsprünge und Ausnehmungen sind zudem leicht mit Fingern ertastbar, wodurch auch die Benutzung, insbesondere die Montage einer Vorrichtung bei schlechten Lichtverhältnissen wesentlich vereinfacht wird. So ist ein richtiges Montieren der Vorrichtung auch unter schwierigen Bedingungen sichergestellt und die Funktionsfähigkeit der Vorrichtung ist gewährleistet.

Gemäß einer weiteren bevorzugten Ausführungsform weist die Vorrichtung mindestens ein inneres Dichtungselement mit einem Kragen auf, wobei der Außendurchmesser des Kragens größer ist als der Innendurchmesser eines äußeren Dichtungselements, dessen Innendurchmesser größer ist als der Innendurchmesser des inneren Dichtungselements. Der Kragen überragt folglich das äußere Dichtungselement in radialer Richtung. Insbesondere ist bevorzugt, dass sämtliche Dichtungselemente einen Kragen aufweisen und die Außendurchmesser aller Krägen in etwa gleich groß sind. So wird einerseits ein ungewolltes Herausziehen eines Dichtungselements aus der Vorrichtung wirksam verhindert, andererseits wird auf die Dichtwirkung einer erfindungsgemäßen Vorrichtung weitergebildet.

Gemäß einer weiteren bevorzugten Ausführungsform weist der mindestens eine Vorsprung einen Griffbereich zum Ergreifen eines Dichtungselements auf, der sich durch die Ausnehmung hindurch axial nach außen erstreckt. Gemäß dieser Ausführungsform ist der Vorsprung jeweils dazu eingerichtet einen Griff zu bilden. Auf diese Weise werden durch die Vorsprünge zwei unterschiedliche Funktionen erfüllt: Einerseits wirken Sie mit den Ausnehmungen als Positioniermittel zusammen, andererseits dienen sie als Griffe, um ein Dichtungselement zu entfernen oder einzusetzen. Dadurch wird die Benutzung, insbesondere Montage einer Vorrichtung zum Abdichten weiter vereinfacht. Auch werden die Fertigungskosten verringert, da der Vorsprung zwei Funktionen erfüllt.

Gemäß einer weiteren bevorzugten Ausführungsform weist der mindestens eine Vorsprung und/oder der Kragen Mittel zum Angeben eines Bereichs von abdichtbaren Leitungsdurchmessern auf. Dies ist insbesondere bevorzugt, wenn der Vorsprung als Griff ausgebildet ist. So ist es für einen Benutzer direkt erkennbar, welchen Leitungsdurchmesserbereich er durch Herausnehmen oder Einsetzen eines Dichtungselements freigibt bzw. vorgibt. Die Benutzung, insbesondere Montage und Handhabung einer erfindungsgemäßen Vorrichtung werden hierdurch weiter vereinfacht. Zusätzlich ist es vorteilhaft, wenn sich die Vorsprünge so axial nach außen erstrecken, dass die Mittel zum Angeben eines Bereichs von abdichtbaren Leitungsdurchmessern auch im zusammengebauten Zustand stets von außen leicht erkennbar sind. So erhält ein Benutzer auf einfache Art und Weise Informationen darüber, welche Bereiche zum Abdichten bei der Vorrichtung vorgesehen sind.

Gemäß einer weiteren bevorzugten Ausführungsform sind die Dichtungselemente schalenförmig in solcher Weise miteinander verbindbar sind, dass eine äußere Umfangsfläche eines inneren Dichtungselements an einer inneren Umfangsfläche eines äußeren Dichtungselements anliegt. So wird eine formschlüssige Verbindung der Dichtungselemente untereinander erzielt. Insbesondere ist dies vorteilhaft, wenn die Dichtungselemente konisch ausgebildet sind. Einer Verschiebung in axialer Richtung wird so wirksam entgegengewirkt und auch die Dichtwirkung einer Vorrichtung wird verbessert.

Gemäß einer weiteren bevorzugten Ausführungsform sind die Dichtungselemente form- und/oder reibschlüssig miteinander verbindbar. Durch eine solche Verbindung wird einer axialen Verschiebung der Dichtungselemente gegeneinander entgegengewirkt. Eine reibschlüssige Verbindung ist insbesondere bevorzugt, wenn Spannmittel vorgesehen sind, um die Dichtungselemente in radialer Richtung gegeneinander zu pressen. Eine formschlüssige Verbindung kann beispielsweise durch einen Kragen, eine Ringnut oder ähnliches realisiert werden. Das axiale Verrutschen der Dichtungselemente gegeneinander wird so verhindert und ein Benutzen, insbesondere die Montage einer erfindungsgemäßen Vorrichtung wird erheblich vereinfacht. Zusätzlich wird durch eine solche Verbindung, insbesondere reibschlüssige Verbindung, die Dichtwirkung einer erfindungsgemä-βen Vorrichtung verbessert.

Gemäß einer weiteren bevorzugten Ausführungsform weist die Vorrichtung einen Blindstopfen zum Verschließen des durch die innere Umfangsfläche des innersten Dichtungselements begrenzten Durchlasses auf. Ein solcher Blindstopfen dient beispielsweise dazu, die Vorrichtung zum Abdichten und folglich die Wanddurchführung vollständig zu verschließen, solange keine Leitung hindurchgeführt ist. Der Blindstopfen kann beispielsweise an dem innersten Dichtungselement angeformt sein und durch Herausreißen bzw. Herausschneiden lösbar sein. Alternativ ist der Blindstopfen so ausgebildet, dass er nach dem Entfernen wieder einfügbar ist. Dazu kann der Blindstopfen ebenso wie die Dichtungselemente einen Kragen aufweisen, sowie eine Ausnehmung und/oder einen Vorsprung, welcher als Positioniermittel des Blindstopfens dienen. Durch den Blindstopfen ist es möglich, Wanddurchführungen mit Dichtungen vorzusehen, bevor tatsächlich Leitungen durchgeführt werden. Dadurch wird sowohl die Flexibilität erhöht als auch die Benutzung vereinfacht. Es kann nach Einbau entschieden werden, ob eine Leitung hindurchgeführt werden soll oder nicht.

Gemäß einer weiteren bevorzugten Ausführungsform ist die konvex ausgebildete Oberfläche des Dichtungselements und/oder des Spannrings in einem Querschnitt U-förmig, stumpfwinklig, V-förmig, trapezförmig, konvex geschwungen oder weist mehrere dieser Formelemente auf. All diese Formen sind auf vorteilhafte Weise dazu geeignet, eine konvexe Oberfläche des Dichtungselements und/oder des Spannrings zu bilden. Ferner sind alle diese Formen einfach zu fertigen, wodurch die Fertigungskosten einer Vorrichtung verringert werden.

Zwei bevorzugte Ausführungsformen der Erfindung werden anhand der Figuren beschrieben. Es zeigen:
- Figur 1: eine Explosionsdarstellung einer Vorrichtung zum Abdichten;
- Figur 2a: einen Vollschnitt durch die Vorrichtung in einem zusammengebauten Zustand;
- Figur 2b: eine Vergrößerung eines Details aus Figur 2a;
- Figur 3a: eine Frontalansicht der Vorrichtung mit einem fehlerhaft eingesetzten Dichtelement;
- Figur 3b: eine Frontalansicht der Vorrichtung mit einem korrekt eingesetzten Dichtungselement;
- Figur 4: eine perspektivische Explosionsdarstellung dreier Dichtungselemente;
- Figur 5a: eine Seitenansicht eines Blindstopfens gemäß einem zweiten Ausführungsbeispiel;
- Figur 5b: eine Frontalansicht des Blindstopfens gemäß Figur 5a;
- Figur 6a: eine Seitenansicht eines Dichtungselements gemäß dem zweiten Ausführungsbeispiel;
- Figur 6b: eine Frontalansicht des Dichtungselements gemäß Figur 6a;
- Figur 7a: eine Seitenansicht eines Dichtungselements gemäß dem zweiten Ausführungsbeispiel;
- Figur 7b: eine Frontalansicht des Dichtungselements gemäß Figur 7a;
- Figur 8a: eine Seitenansicht eines Dichtungselements gemäß dem zweiten Ausführungsbeispiel; und
- Figur 8b: eine Frontalansicht des Dichtungselements gemäß Figur 8a.

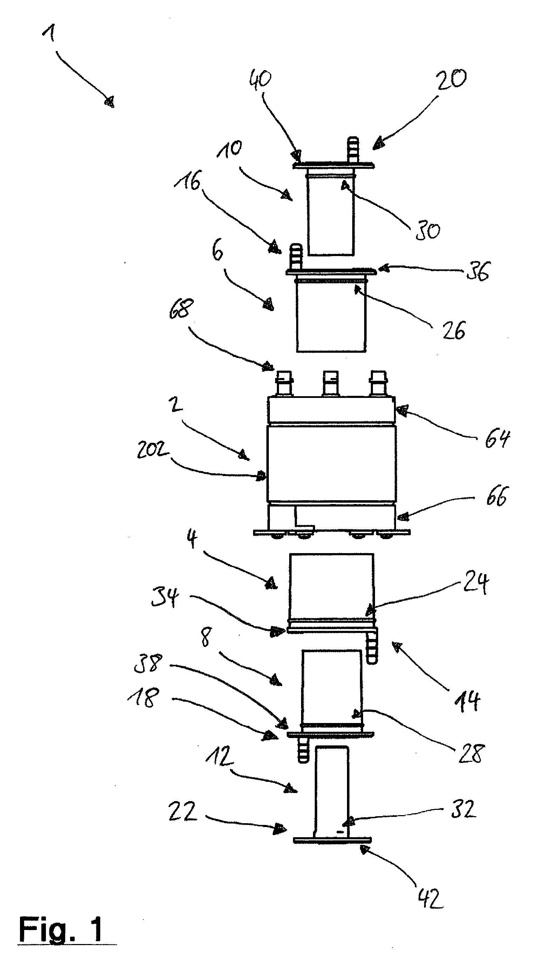

Eine Vorrichtung 1 zum Abdichten weist gemäß dem ersten Ausführungsbeispiel (Figur 1) sechs Dichtungselemente 2, 4, 6, 8, 10, 12 auf, die lösbar im Wesentlichen koaxial ineinander anordenbar sind. Das Dichtungselement 2 stellt dabei das radial äußerste Dichtungselement dar, dessen äußere Umfangsfläche 202 dazu eingerichtet ist mit einem Wanddurchbruch zusammenzuwirken, insbesondere dichtend zusammenzuwirken. Alternativ kann die Vorrichtung 1 zusätzlich ein Gehäuse aufweisen (nicht gezeigt). Die Dichtungselemente 4, 6, 8, 10 sind im Wesentlichen ringförmig ausgebildet und können jeweils ineinander und in dem Dichtungselement 2 angeordnet werden.

Jedes der Dichtungselemente 4, 6, 8, 10, 12, die in dem Dichtungselement 2 anordenbar sind weisen Positioniermittel 14, 16, 18, 20, 22 auf, die dazu eingerichtet sind jeweils eine bzw. zwei Positionen von zwei Dichtungselementen 2, 4, 6, 8, 10, 12 relativ zueinander vorzusehen. Ferner weist jedes der Dichtungselemente 4, 6, 8, 10, 12, welche in dem Dichtungselement 2 anordenbar sind an einem axialen Ende einen ringförmigen Wulst 24, 26, 28, 30, 32 sowie einen Kragen 34, 36, 38, 40, 42 auf. Der ringförmige Wulst 24, 26, 28, 30, 32 ist dazu eingerichtet mit einer ringförmigen Nut (in Figur 1 nicht gezeigt) zusammenzuwirken. Die Kragen 34, 36, 38, 40, 42 sind so angeordnet, dass die Kragen jeweils zweier radial benachbarter Dichtungselemente 4, 6, 8, 10, 12 auf axial gegenüberliegenden Enden der Vorrichtung 1 angeordnet sind. So wirken die Kragen 34, 36, 38, 40, 42 einem ungewollten axialen Verschieben der Dichtungselemente 2, 4, 6, 8, 10, 12 entgegen.

Zusätzlich sind an dem äußersten Dichtungselement 2 an jeweils axialen Enden zwei Spannringe 64, 66 angeordnet, die über Spannschrauben 68 (nur eine mit Bezugszeichen versehen) miteinander verbunden sind. Die Spannringe 64, 66 sind dazu eingerichtet das Dichtungselement 2 derart zu verspannen, dass eine radiale Ausdehnung des Dichtungselements 2 bewirkt wird. So werden Dichtungselemente 4, 6, 8, 10, 12, welche in dem Dichtungselement 2 im Wesentlichen koaxial angeordnet sind, radial verpresst. So wird die Dichtleistung einer Vorrichtung 1 gesteigert.

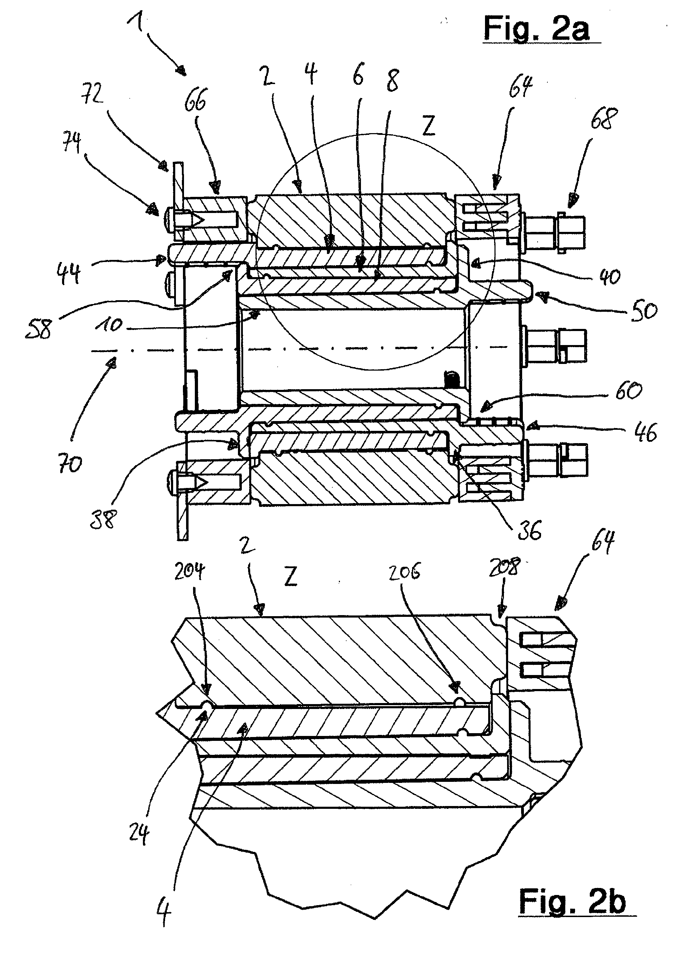

Gemäß den Figuren 2a und 2b ist die Vorrichtung 1 in einem zusammengebauten Zustand dargestellt. Die Dichtungselemente 4, 6, 8, 10 sind koaxial bezogen auf die Längsachse 70 ineinander und in dem Dichtungselement 2 angeordnet. Dichtungselement 12, welches als Blindstopfen 12 ausgebildet ist, ist gemäß Figuren 2a, 2b nicht in der Vorrichtung 1 angeordnet. Dichtungselemente 4, 6, 8, 10 sind bezogen auf Längsachse 70 wenigstens teilweise konisch ausgebildet. Während die Dichtungselemente 4, 6, 8 sowohl an der inneren Umfangsfläche, als auch an der äußeren Umfangsfläche konisch ausgebildet sind, ist Dichtungselement 10 an der äußeren Umfangsfläche konisch ausgebildet, an der inneren Umfangsfläche jedoch zylindrisch. Die Dichtungselemente 4, 6, 8, 10 sind so angeordnet, dass ihre Kragen 34, 36, 38, 40 jeweils wechselseitig angeordnet sind, das heißt die Kragen 34, 36, 38 ,40 zweier benachbarter Dichtungselemente 4, 6, 8, 10 sind auf gegenüberliegenden axialen Enden angeordnet.

Um ein fehlerhaftes Zusammenbauen der Vorrichtung 1 zu vermeiden und so die Funktionsfähigkeit der Vorrichtung 1 sicherzustellen, weisen die Dichtungselemente 4, 6, 8, 10, 12 Positoniermittel 14, 16, 18, 20, 22 auf, die hier als Vorsprung 44, 46, 48, 50, 52 und korrespondierende Ausnehmung 54, 56, 58, 60, 62 ausgebildet sind, wobei die Ausnehmung 54, 56, 58, 60, 62 jeweils in dem Kragen 34, 36, 38, 40, 42 eines Dichtungselements 4, 6, 8, 10, 12 ausgebildet ist. Die Ausnehmungen 54, 56, 58, 60, 62 sind dabei jeweils so ausgebildet, dass sie mit Vorsprüngen 44, 46, 48, 50, 52 des radial jeweils übernächsten Dichtungselements 4, 6, 8, 10, 12 korrespondieren. Die Vorsprünge 44, 46, 48, 50, 52 erstrecken sich dabei jeweils durch die Ausnehmungen 54, 56, 58, 60, 62 axial nach außen und bilden so einen Griffbereich, zum Ergreifen und Herausziehen bzw. Hineinstecken eines Dichtungselements 4, 6, 8, 10, 12 in die Vorrichtung 1.

Die Funktionsweise der Positioniermittel 14, 16, 18, 20, 22 zum Verhindern eines falschen Zusammenbaus der einzelnen Dichtungselemente 2, 4, 6, 8, 10, 12 ist aus den Figuren 2a bis 4 ersichtlich. Beim Zusammenbauen kann beispielsweise zunächst Dichtungselement 4 zum Dichtungselement 2 gefügt werden. Dichtungselement 4 weist nahe zum Kragen 34 und Vorsprung 44 einen ringförmigen Wulst 24 auf. Dichtungselement 2 weist jeweils nahe den axialen Enden eine ringförmige Nut 204, 206 an der Innenseite auf, in die der ringförmige Wulst 24 eingreifen kann. Es ist folglich möglich, Dichtungselement 4 aus zwei verschiedenen axialen Richtungen zum Dichtungselement 2 zu fügen. Es sind also zwei Positioniermöglichkeiten des Dichtungselements 4 bezogen auf das Dichtungselement 2 vorgesehen. Diese Positioniermöglichkeiten beziehen sich hier im Wesentlichen auf das axiale Positionieren. Zusätzlich sind eine Vielzahl rotatorischer Positionen zwischen Dichtungselement 2 und Dichtungselement 4 möglich, wodurch jedoch die Funktion der Vorrichtung 1 nicht beeinflusst wird.

Nachdem Dichtungselement 4 wie in Figur 2a dargestellt (bezogen auf Figur 2a von links) zum Dichtungselement 2 gefügt worden ist, kann nun Dichtungselement 6 gefügt werden. Insbesondere aufgrund der konischen Ausbildung der Dichtungselemente 4, 6, 8, 10, 12 ist es für die Funktionsfähigkeit der Vorrichtung 1 vorteilhaft, die Dichtungselemente richtig zu fügen, insbesondere von der richtigen axialen Seite zu fügen. Dichtungselement 6 weist hierzu als Positioniermittel 16 an dem Kragen 36 eine Ausnehmung (in Figur 2a nicht gezeigt) und einen Vorsprung 46 auf. Der Kragen 36 des Dichtungselements 6 verhindert folglich, das Dichtungselement 6 ebenfalls wie Dichtungselement 4 (bezogen auf Figur 2a) von links gefügt wird.

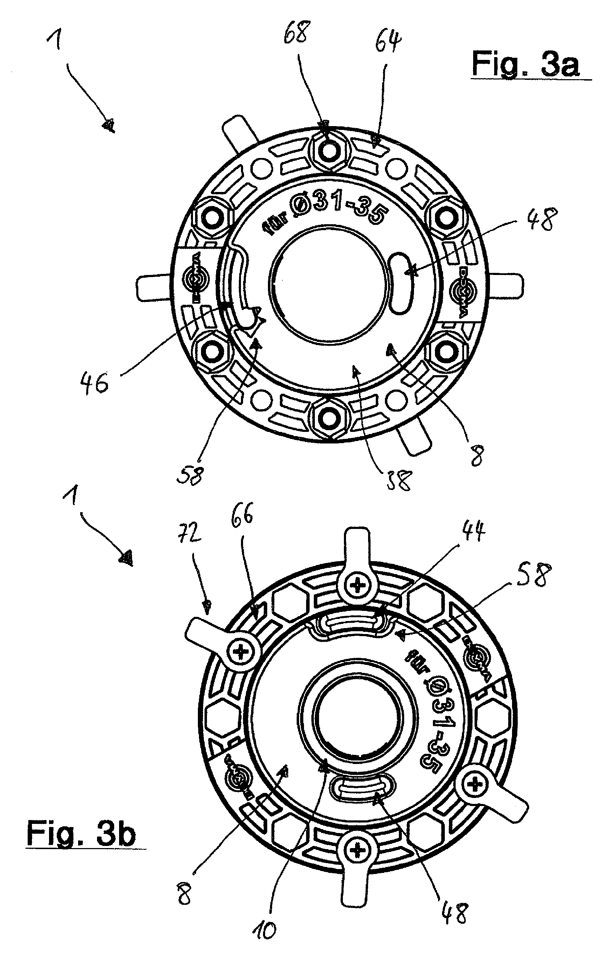

Ein solches fehlerhaftes Fügen ist in Figur 3a dargestellt. Figur 3a zeigt die Vorrichtung 1 bezogen auf Figur 2a von rechts in einer Frontalansicht. Dichtungselement 4 und 6 wurden bereits in korrekter Art und Weise gefügt. Bezogen auf Figur 2a ist Dichtungselement 6 von rechts aus gefügt worden. In Figur 3a ist nun dargestellt, Dichtungselement 8 ebenfalls von rechts zu fügen. Dieses fehlerhafte Fügen wird durch Kragen 38 des Dichtungselements 8 sowie Vorsprung 46 des Dichtungselements 6 wirksam verhindert. Vorsprung 46 ist demnach so dimensioniert, dass er für die Ausnehmung 58 von Dichtungselement 8 zu groß ist, sodass ein Fügen von Dichtungselement 8 von rechts bezogen auf Figur 2a nicht möglich ist. Wird jedoch Dichtungselement 8 bezogen auf Figur 2a von links gefügt, wie in der Frontalansicht von links in Figur 3b dargestellt, ist ein Fügen möglich. Ausnehmung 58 korrespondiert mit Vorsprung 44 von Dichtungselement 4, sodass ein Fügen möglich ist.

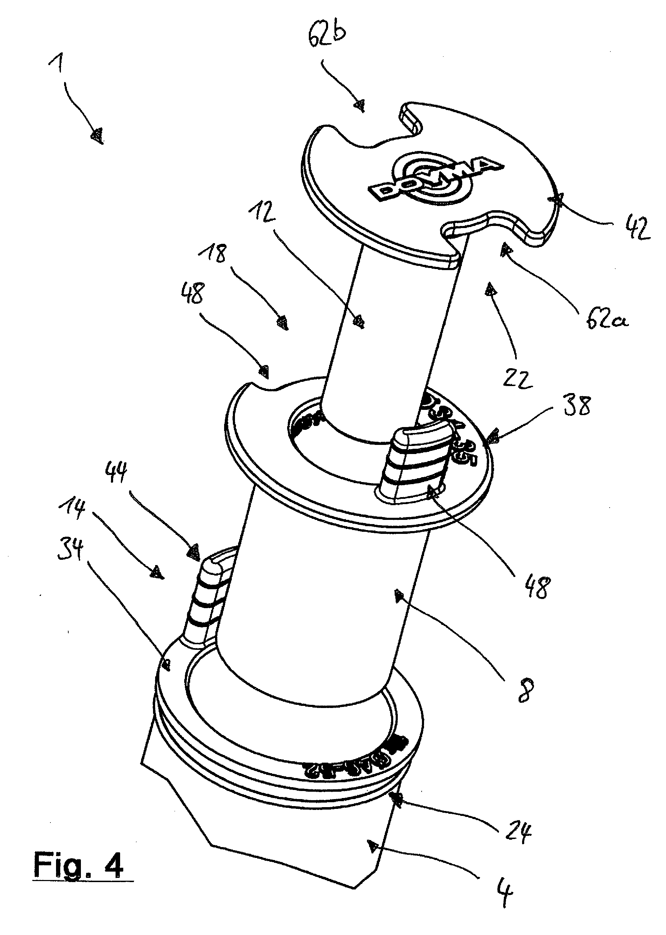

Gemäß Figur 4 weist Dichtungselement 12, welches als Blindstopfen ausgebildet ist, an seinem Kragen 42 zwei Ausnehmungen 62a, 62b auf, die mit Vorsprung 48 von Dichtungselement 8 korrespondieren. Für Blindstopfen 12 sind demnach bezogen auf Dichtungselement 8 eine axiale Position vorgesehen, sowie zwei rotatorische Positionen, welche um 180 Grad verdreht sind.

Ferner weist jedes Dichtungselement 4, 6, 8, 10 an einer äußeren Umfangsfläche einen ringförmigen Wulst 24, 26, 28, 30 auf, der jeweils mit einer ringförmigen Nut an dem benachbarten Dichtungselement 2, 4, 6, 8 zusammenwirkt. Hierdurch wird einerseits das Positionieren verbessert, indem ein Benutzer taktile und/oder akustische Signale über das endgültige Fügen erhält, als auch die Dichtwirkung der Vorrichtung 1 verbessert. Zur weiteren Verbesserung der Dichtwirkung ist Dichtungselement 2 mittels der Spannringe 64, 66 verpressbar, sodass sich Dichtungselement 2 in radialer Richtung ausdehnt und Dichtungselemente 4, 6, 8, 10, 12 gegeneinander verpresst. Um dieses Verspannen der Spannringe 64, 66 zu erleichtern und um eine gleichmäßige Verpressung zu erreichen, sind die axialen seitlichen Oberflächen 208 des Dichtungselements 2 konvex ausgebildet. Alternativ sind die axialen Oberflächen der Spannringe 64, 66 konvex ausgebildet.

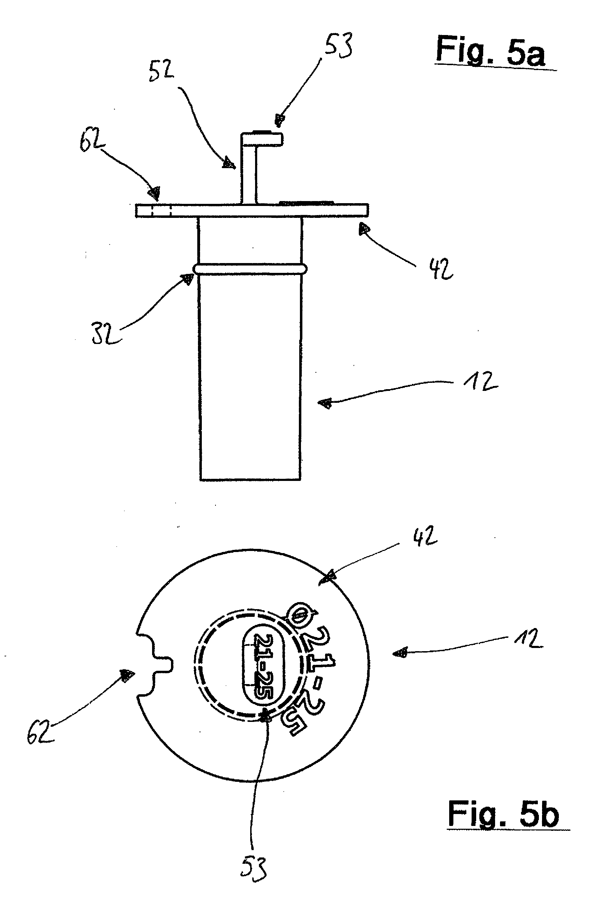

In den Figuren 5a bis 8b sind vier Dichtungselemente gemäß einem zweiten Ausführungsbeispiel dargestellt. Gleiche und ähnliche Elemente sind mit gleichen Bezugszeichen versehen.

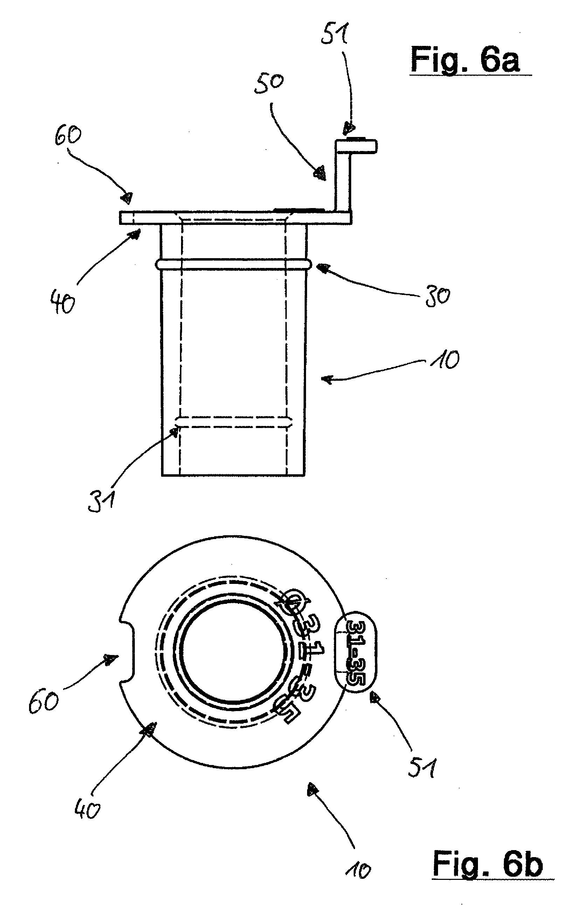

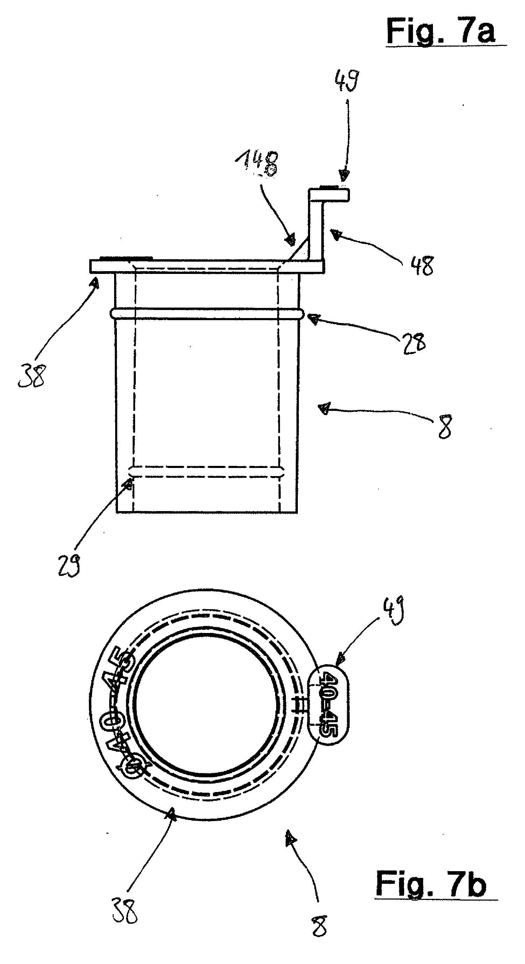

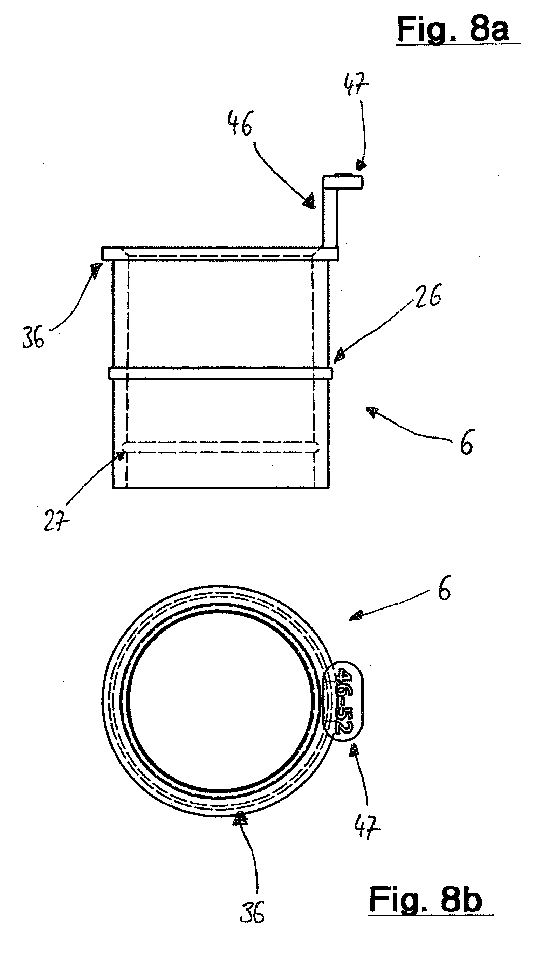

Derwesentliche Unterschied zwischen dem ersten und zweiten Ausführungsbeispiel liegt in der Gestaltung der Vorsprünge 46, 48, 50, 52 und der Ausnehmungen 60, 62. Dichtungselement 12 gemäß Figur 5a und 5b ist als Blindstopfen ausgebildet und dazu eingerichtet in Dichtungselement 10 gemäß Figur 6a, 6b im Wesentlichen koaxial hineingesteckt zu werden. Dichtungselement 10 gemäß Figur 6a, 6b ist dazu eingerichtet im Wesentlichen koaxial in Dichtungselement 8 gemäß Figur 7a, 7b hineingesteckt zu werden und Dichtungselement 8 ist schließlich dazu eingerichtet in Dichtungselement 6 gemäß Figuren 8a, 8b hineingesteckt zu werden. Dichtungselement 6 ist dann dazu eingerichtet in ein äußeres Dichtungselement (in diesem zweiten Ausführungsbeispiel nicht gezeigt) gesteckt zu werden. Auch diese Dichtungselemente 6, 8, 10, 12 weisen an einem axialen Ende einen Kragen 36, 38, 40, 42 sowie einen ringförmigen Wulst 26, 28, 30, 32 auf. Sie sind dazu eingerichtet so ineinandergesteckt zu werden, dass die Kragen 36, 38, 40, 42 auf jeweils gegenüberliegenden axialen Enden angeordnet sind. Dabei verhindern das Zusammenwirken von Kragen 36, 38, 40, 42, Vorsprung 46, 48, 148, 50, 52 und Ausnehmung 60, 62 das falsche Zusammenbauen, insbesondere das Zusammenbauen von der falschen Seite.

Gemäß diesem Ausführungsbeispiel ist Ausnehmung 62 von Dichtungselement 12 korrespondierend zum Vorsprung 48, 148 von Dichtungselement 8 ausgebildet. Entsprechend ist Ausnehmung 60 korrespondierend zum Vorsprung 50 von Dichtungselement 10 ausgebildet. Zusätzlich weisen die Vorsprünge 46, 48, 50, 52 gemäß diesem zweiten Ausführungsbeispiel an einem axialen Ende gesonderte Griffbereiche 47, 49, 51, 53 auf, zum Ergreifen und Herausziehen bzw. Hineinstecken eines Dichtungselements 6, 8, 10, 12. Auf einer Oberfläche dieser Griffbereiche 47, 49, 51, 53 sind Durchmesserbereiche von Leitungen angegeben, welche mittels des entsprechenden Dichtungselements 6, 8, 10, 12 abdichtbar ist. Dabei sind die Griffbereiche 47, 49, 51, 53 so angeordnet, dass diese auch in einem zusammengebauten Zustand stets von außen gut sichtbar sind.

## Patentansprüche

1. Vorrichtung (1) zum Abdichten mindestens einer Leitung im Bereich einer Wanddurchführung, mit zwei oder mehreren ringförmigen, elastisch verformbaren Dichtungselementen (2, 4, 6, 8, 10, 12), die unterschiedliche Innendurchmesser aufweisen und lösbar im Wesentlichen koaxial ineinander anordenbar sind, wobei die Dichtungselemente (2, 4, 6, 8, 10, 12) bezogen auf eine Längsachse (70) wenigstens teilweise konisch ausgebildet sind
**gekennzeichnet durch** Positioniermittel (14, 16, 18, 20, 22), die dazu eingerichtet sind, eine oder mehrere Positioniermöglichkeiten von jeweils mindestens zwei Dichtungselementen (2, 4, 6, 8, 10, 12) relativ zueinander und/oder zu der Vorrichtung (1) vorzusehen, dass die Dichtungselemente (2, 4, 6, 8, 10, 12) jeweils einen Kragen (34, 36, 38, 40, 42) aufweisen und die Kragen (34, 36, 38, 40, 42) zweier benachbarter Dichtungselemente (2, 4, 6, 8, 10, 12) in axialer Richtung auf gegenüberliegenden Seiten der Vorrichtung (1) angeordnet sind, wobei der Kragen (34, 36, 38, 40, 42) mindestens eines jeweils ersten Dichtungselements (2, 4, 6, 8, 10, 12) eine Ausnehmung (54, 56, 58, 60, 62) aufweist und ein zweites, radial benachbartes oder beabstandetes Dichtungselement (2, 4, 6, 8, 10, 12) einen Vorsprung (44, 46, 48, 50, 52) aufweist, der dazu eingerichtet ist mit der Ausnehmung (54, 56, 58, 60, 62) formschlüssig als Positioniermittel (14, 16, 18, 20, 22) zusammenzuwirken.

2. Vorrichtung nach Anspruch 1,
**gekennzeichnet durch** Spannmittel (64, 66, 68) zum Verspannen der Dichtungselemente (2, 4, 6, 8, 10, 12) die eingerichtet sind, eine Pressung der Dichtungselemente (2, 4, 6, 8, 10, 12) in radialer Richtung zu bewirken,
wobei die Spannmittel (64, 66, 68) mindestens einen Spannring (64, 66) zum Spannen eines ringförmigen, elastisch verformbaren Dichtungselements (2) aufweisen und eine Oberfläche des Spannrings (64, 66) gegen eine axiale Oberfläche (208) eines Dichtungselements (2) pressbar ist, wobei mindestens eine der Oberflächen konvex ausgebildet ist.

3. Vorrichtung nach Anspruch 1 oder 2,
**dadurch gekennzeichnet, dass** die Positioniermittel (14, 16, 18, 20, 22) an den Dichtungselementen (2, 4, 6, 8, 10, 12) ausgebildete Vorsprünge (44, 46, 48, 50, 52) und/oder Ausnehmungen (54, 56, 58, 60, 62) aufweisen, die mit korrespondierenden Ausnehmungen (54, 56, 58, 60, 62) und/oder Vorsprüngen (44, 46, 48, 50, 52) zum Positionieren der Dichtungselemente (2, 4, 6, 8, 10, 12) zusammenwirken.

4. Vorrichtung nach einem der vorstehenden Ansprüche,
**gekennzeichnet durch** mindestens ein inneres Dichtungselement (2, 4, 6, 8, 10, 12) mit einem Kragen (34, 36, 38, 40, 42), wobei der Außendurchmesser des Kragens (34, 36, 38, 40, 42) größer ist als der Innendurchmesser eines äußeren Dichtungselements (2, 4, 6, 8, 10, 12), dessen Innendurchmesser größer ist als der Innendurchmesser des inneren Dichtungselements (2, 4, 6, 8, 10, 12).

5. Vorrichtung nach Anspruch einem der vorstehenden Ansprüche,
**dadurch gekennzeichnet, dass** der mindestens eine Vorsprung (44, 46, 48, 50, 52) einen Griffbereich (47, 49, 51, 53) zum Ergreifen eines Dichtungselements (2, 4, 6, 8, 10, 12) aufweist, der sich durch die Ausnehmung (54, 56, 58. 60, 62) hindurch axial nach Außen erstreckt.

6. Vorrichtung nach einem der vorstehenden Ansprüche,
**dadurch gekennzeichnet, dass** der mindestens eine Vorsprung (44, 46, 48, 50, 52) und/oder der Kragen (34, 36, 38, 40, 42) Mittel zum Angeben eines Bereichs von abdichtbaren Leitungsdurchmessern aufweist.

7. Vorrichtung nach einem der vorstehenden Ansprüche,
**dadurch gekennzeichnet, dass** die Dichtungselemente (2, 4, 6, 8, 10, 12) schalenförmig in solcher Weise miteinander verbindbar sind, dass eine äußere Umfangsfläche eines inneren Dichtungselements (2, 4, 6, 8, 10, 12) an einer inneren Umfangsfläche eines äußeren Dichtungselements (2, 4, 6, 8, 10, 12) anliegt.

8. Vorrichtung nach Anspruch 7,
**dadurch gekennzeichnet, dass** eine umlaufende ringförmige Erhebung (24, 26, 28, 30) auf der äußeren Umfangsfläche des inneren Dichtungselements (2, 4, 6, 8, 10, 12) angeordnet ist, die in eine Ringnut (27, 29, 31, 204, 206) in der inneren Umfangsfläche des äußeren Dichtungselements (2, 4, 6, 8, 10, 12) formschlüssig eingreift.

9. Vorrichtung nach einem der vorstehenden Ansprüche,
**dadurch gekennzeichnet, dass** die Dichtungselemente (2, 4, 6, 8, 10, 12) form- und/oder reibschlüssig miteinander verbindbar sind.

10. Vorrichtung nach Anspruch 9,
**dadurch gekennzeichnet, dass** die form- und/oder reibschlüssige Verbindung der Dichtungselemente (2, 4, 6, 8, 10, 12) so ausgebildet ist, dass sie einer axialen Verschiebung der Dichtungselemente (2, 4, 6, 8, 10, 12) zueinander entgegenwirkt.

11. Vorrichtung nach einem der vorstehenden Ansprüche,
**gekennzeichnet durch** einen Blindstopfen (12) zum Verschließen des **durch** die innere Umfangsfläche des innersten Dichtungselements (10) begrenzten Durchlasses.

12. Vorrichtung nach Anspruch 11,
**dadurch gekennzeichnet, dass** der Blindstopfen (12) reib- und/oder formschlüssig an dem innersten Dichtungselement (10) befestigbar oder einstückig an dem innersten Dichtungselement (10) angeformt ist.

13. Vorrichtung nach Anspruch 2,
**dadurch gekennzeichnet, dass** die konvex ausgebildete Oberfläche (208) in einem Querschnitt U-förmig, stumpfwinkelig, V-förmig, trapezförmig, konvex geschwungen ist, oder mehrere dieser Formelemente aufweist.

## Claims

1. Device (1) for sealing at least one line in the region of a wall conduit, with two or more annular, elastically deformable, sealing elements (2, 4, 6, 8, 10, 12) which have varying inner diameters and can be arranged detachably substantially coaxially inside one another, the sealing elements (2, 4, 6, 8, 10, 12) having an at least partly conical form in relation to a longitudinal axis (70), **characterized by** positioning means (14, 16, 18, 20, 22) which are designed to provide one or more possibilities for positioning in each case at least two sealing elements (2, 4, 6, 8, 10, 12) relative to each other and/or to the device (1), and in that the sealing elements (2, 4, 6, 8, 10, 12) in each case have a collar (34, 36, 38, 40, 42) and the collars (34, 36, 38, 40, 42) of two adjacent sealing elements (2, 4, 6, 8, 10, 12) are arranged in an axial direction on opposite sides of the device (1), the collar (34, 36, 38, 40, 42) of at least one respective first sealing element (2, 4, 6, 8, 10, 12) having a recess (54, 56, 58, 60, 62) and a second, radially adjacent or spaced sealing element (2, 4, 6, 8, 10, 12) having a projection (44, 46, 48, 50, 52) which is designed to cooperate as a positioning means (14, 16, 18, 20, 22) in a form-fitting manner with the recess (54, 56, 58, 60, 62).

2. Device according to Claim 1, **characterized by** clamping means (64, 66, 68) for bracing the sealing elements (2, 4, 6, 8, 10, 12), which are designed to cause pressing of the sealing elements (2, 4, 6, 8, 10, 12) in the radial direction, the clamping means (64, 66, 68) having at least one clamping ring (64, 66) for clamping an annular, elastically deformable, sealing element (2) and a surface of the clamping ring (64, 66) being able to be pressed against an axial surface (208) of a sealing element (2), at least one of the surfaces having a convex form.

3. Device according to Claim 1 or 2, **characterized in that** the positioning means (14, 16, 18, 20, 22) have projections (44, 46, 48, 50, 52) and/or recesses (54, 56, 58, 60, 62) which are formed on the sealing elements (2, 4, 6, 8, 10, 12) and which cooperate with corresponding recesses (54, 56, 58, 60, 62) and/or projections (44, 46, 48, 50, 52) for positioning the sealing elements (2, 4, 6, 8, 10, 12).

4. Device according to one of the preceding claims, **characterized by** at least one inner sealing element (2, 4, 6, 8, 10, 12) with a collar (34, 36, 38, 40, 42), the outer diameter of the collar (34, 36, 38, 40, 42) being greater than the inner diameter of an outer sealing element (2, 4, 6, 8, 10, 12), the inner diameter of which is greater than the inner diameter of the inner sealing element (2, 4, 6, 8, 10, 12).

5. Device according to one of the preceding claims, **characterized in that** the at least one projection (44, 46, 48, 50, 52) has a gripping region (47, 49, 51, 53) for gripping a sealing element (2, 4, 6, 8, 10, 12), which extends through the recess (54, 56, 58, 60, 62) axially outwards.

6. Device according to one of the preceding claims, **characterized in that** the at least one projection (44, 46, 48, 50, 52) and/or the collar (34, 36, 38, 40, 42) has means for indicating a range of line diameters which may be sealed.

7. Device according to one of the preceding claims, **characterized in that** the sealing elements (2, 4, 6, 8, 10, 12) can be connected together in shell fashion in such a way that an outer circumferential surface of an inner sealing element (2, 4, 6, 8, 10, 12) bears against an inner circumferential surface of an outer sealing element (2, 4, 6, 8, 10, 12).

8. Device according to Claim 7, **characterized in that** a surrounding annular relief (24, 26, 28, 30) is arranged on the outer circumferential surface of the inner sealing element (2, 4, 6, 8, 10, 12) and engages in a form-fitting manner inside an annular groove (27, 29, 31, 204, 206) in the inner circumferential surface of the outer sealing element (2, 4, 6, 8, 10, 12).

9. Device according to one of the preceding claims, **characterized in that** the sealing elements (2, 4, 6, 8, 10, 12) can be connected together in a form-fitting and/or frictionally engaged manner.

10. Device according to Claim 9, **characterized in that** the form-fitting and/or frictionally engaged connection of the sealing elements (2, 4, 6, 8, 10, 12) is designed to counteract an axial displacement of the sealing elements (2, 4, 6, 8, 10, 12) with respect to each other.

11. Device according to one of the preceding claims, **characterized by** a blind plug (12) for closing off the through-opening delimited by the inner circumferential surface of the innermost sealing element (10).

12. Device according to Claim 11, **characterized in that** the blind plug (12) can be fastened in a frictionally engaged and/or form-fitting manner on the innermost sealing element (10) or can be formed as one piece on the innermost sealing element (10).

13. Device according to Claim 2, **characterized in that** the convexly formed surface (208) is contoured so as to have a cross-section which is U-shaped, obtuse-angled, V-shaped, trapezoidal or convex, or has one or more of these form features.

## Revendications

1. Dispositif (1) d'étanchéité d'au moins une conduite dans la zone d'une traversée murale, comprenant deux ou plusieurs éléments d'étanchéité (2, 4, 6, 8, 10, 12) annulaires, déformables élastiquement qui présentent différents diamètres intérieurs et peuvent être disposés de manière amovible sensiblement coaxialement les uns dans les autres, dans lequel les éléments d'étanchéité (2, 4, 6, 8, 10, 12) sont réalisés au moins partiellement de manière conique par rapport à un axe longitudinal (70),
**caractérisé par** des moyens de positionnement (14, 16, 18, 20, 22) qui sont aménagés afin de prévoir une ou plusieurs possibilités de positionnement de respectivement au moins deux éléments d'étanchéité (2, 4, 6, 8, 10, 12) l'un par rapport à l'autre et/ou par rapport au dispositif (1), en ce que les éléments d'étanchéité (2, 4, 6, 8, 10, 12) présentent respectivement un collet (34, 36, 38, 40, 42) et les collets (34, 36, 38, 40, 42) de deux éléments d'étanchéité contigus (2, 4, 6, 8, 10, 12) sont disposés dans le sens axial sur des côtés opposés du dispositif (1), dans lequel le collet (34, 36, 38, 40, 42) d'au moins un premier élément d'étanchéité (2, 4, 6, 8, 10, 12) respectif présente un évidement (54, 56, 58, 60, 62) et un second élément d'étanchéité (2, 4, 6, 8, 10, 12) radialement espacé ou contigu présente une saillie (44, 46, 48, 50, 52) qui est aménagée afin de coopérer par complémentarité de formes avec l'évidement (54, 56, 58, 60, 62) comme moyens de positionnement (14, 16, 18, 20, 22).

2. Dispositif selon la revendication 1,
**caractérisé par** des moyens de serrage (64, 66, 68) pour le serrage des éléments d'étanchéité (2, 4, 6, 8, 10, 12) qui sont aménagés afin d'exercer une pression sur les éléments d'étanchéité (2, 4, 6, 8, 10, 12) dans le sens radial,
dans lequel les moyens de serrage (64, 66, 68) présentent au moins un anneau de serrage (64, 66) pour le serrage d'un élément d'étanchéité (2) annulaire, déformable élastiquement et une surface de l'anneau de serrage (64, 66) peut être pressée contre une surface axiale (208) d'un élément d'étanchéité (2), au moins l'une des surfaces étant réalisée de manière convexe.

3. Dispositif selon la revendication 1 ou 2,
**caractérisé en ce que** les moyens de positionnement (14, 16, 18, 20, 22) présentent des saillies (44, 46, 48, 50, 52) et/ou des évidements (54, 56, 58, 60, 62) réalisés sur les éléments d'étanchéité (2, 4, 6, 8, 10, 12), qui coopèrent avec des évidements (54, 56, 58, 60, 62) et/ou des saillies (44, 46, 48, 50, 52) correspondants pour le positionnement des éléments d'étanchéité (2, 4, 6, 8, 10, 12).

4. Dispositif selon l'une quelconque des revendications précédentes,
**caractérisé par** au moins un élément d'étanchéité (2, 4, 6, 8, 10, 12) intérieur avec un collet (34, 36, 38, 40, 42), dans lequel le diamètre extérieur du collet (34, 36, 38, 40, 42) est supérieur au diamètre intérieur d'un élément d'étanchéité (2, 4, 6, 8, 10, 12) extérieur, dont le diamètre intérieur est supérieur au diamètre intérieur de l'élément d'étanchéité intérieur (2, 4, 6, 8, 10, 12).

5. Dispositif selon l'une quelconque des revendications précédentes,
**caractérisé en ce que** ladite au moins une saillie (44, 46, 48, 50, 52) présente une zone de préhension (47, 49, 51, 53) pour la saisie d'un élément d'étanchéité (2, 4, 6, 8, 10, 12) qui s'étend au travers de l'évidement (54, 56, 58, 60, 62) axialement vers l'extérieur.

6. Dispositif selon l'une quelconque des revendications précédentes,
**caractérisé en ce que** ladite au moins une saillie (44, 46, 48, 50, 52) et/ou le collet (34, 36, 38, 40, 42) présente des moyens pour indiquer un domaine de diamètres de conduite pouvant être rendus étanches.

7. Dispositif selon l'une quelconque des revendications précédentes,
**caractérisé en ce que** les éléments d'étanchéité (2, 4, 6, 8, 10, 12) peuvent être reliés ensemble en forme de cuvette de telle manière qu'une surface périphérique extérieure d'un élément d'étanchéité intérieur (2, 4, 6, 8, 10, 12) repose contre une surface périphérique intérieure d'un élément d'étanchéité (2, 4, 6, 8, 10, 12) extérieur.

8. Dispositif selon la revendication 7,
**caractérisé en ce qu'**une élévation (24, 26, 28, 30) annulaire périphérique est disposée sur la surface périphérique extérieure de l'élément d'étanchéité (2, 4, 6, 8, 10, 12) intérieur, laquelle s'engage par complémentarité de formes dans une rainure annulaire (27, 29, 31, 204, 206) dans la surface périphérique intérieure de l'élément d'étanchéité extérieur (2, 4, 6, 8, 10, 12).

9. Dispositif selon l'une quelconque des revendications précédentes,
**caractérisé en ce que** les éléments d'étanchéité (2, 4, 6, 8, 10, 12) peuvent être reliés ensemble par complémentarité de formes et/ou friction.

10. Dispositif selon la revendication 9,
**caractérisé en ce que** la liaison par complémentarité de formes et/ou friction des éléments d'étanchéité (2, 4, 6, 8, 10, 12) est réalisée de sorte qu'elle agisse contre un déplacement axial des éléments d'étanchéité (2, 4, 6, 8, 10, 12).

11. Dispositif selon l'une quelconque des revendications précédentes,
**caractérisé par** un bouchon borgne (12) pour la fermeture du passage délimité par la surface périphérique intérieure de l'élément d'étanchéité le plus à l'intérieur (10).

12. Dispositif selon la revendication 11,
**caractérisé en ce que** le bouchon borgne (12) peut être fixé par friction et/ou par complémentarité de formes sur l'élément d'étanchéité le plus à l'intérieur (10) ou est formé d'un seul tenant sur l'élément d'étanchéité le plus à l'intérieur (10).

13. Dispositif selon la revendication 2,
**caractérisé en ce que** la surface (208) réalisée de manière convexe est incurvée dans une section transversale en forme de U, à angle obtus, en forme de V, en forme de trapèze, de manière convexe ou présente plusieurs de ces éléments de forme.
